# EUROPÄISCHE PATENTANMELDUNG

(11) **EP 2 747 042 A1**
(43) Veröffentlichungstag der Anmeldung: **25.06.2014**
(21) Anmeldenummer: 13196815.8
(22) Anmeldetag: 12.12.2013
(51) Int. Cl.: G07C 9/00, G07F 17/42

(54) **Verfahren und System zur Ausgabe oder Kontrolle von Nutzungsberechtigungen**

(30) Priorität: 22.12.2012 DE 102012025338
(71) Anmelder: DB Systel GmbH, 60326 Frankfurt am Main (DE)
(72) Erfinder: Huber, Gabriel, 60311 Frankfurt (DE); Romahn, Ulrich, 64665 Alsbach-Hähnlein (DE); Bussmann, Sabine, 65510 Hünstetten (DE)

(57) **Zusammenfassung**

Die Erfindung betrifft ein Verfahren und System zur Ausgabe oder Kontrolle von Nutzungsberechtigungen. Die Erfindung soll die Aufwendungen für Installation und Betriebsführung von Ausgabe- und Kontrollterminals für elektronische Nutzungs-berechtigungen reduzieren. Hierzu sind verfahrensgemäß die folgenden Verfah-rensschritte vorgesehen:
■ Registrieren einer Chipkarte an einem externen Terminal und Auslesen von den Nutzungsumfang beschreibenden oder die Nutzungsberechti-gung identifizierenden Daten aus einem Chipkarten-Speicher,
■ Übertragung dieser Daten vom externen Terminal an einen zentralen Applikationsserver,
■ Verarbeitung dieser Daten durch den zentralen Applikationsserver und Überführung des Verarbeitungsergebnisses in ein verschlüsseltes Chipkarten-Kommando,
■ Senden mindestens eines verschlüsselten Chipkarten-Kommandos vom zentralen Applikationsserver an das externe Terminal sowie Empfangen mindestens einer verschlüsselten Chipkarten-Antwort des externen Terminals im zentralen Applikationsserver,
■ Entschlüsselung und Verarbeitung der mindestens einen verschlüsselten Chipkarten-Antwort durch den zentralen Applikationsserver sowie RückÜbertragung des unverschlüsselten Verarbeitungsergebnisses an das externe Terminal,
■ Auswertung des unverschlüsselten Verarbeitungsergebnisses durch das externe Terminal sowie Ansteuerung eines Aktuators oder Anzeigeelementes.

## Beschreibung

Die Erfindung betrifft ein Verfahren und System zur Ausgabe oder Kontrolle von Nutzungsberechtigungen.

Die Verwendung von elektronischen Tickets im öffentlichen Personenverkehr ist international weit verbreitet. Es sind verschiedene Lösungen realisiert worden, die meist die aktive Mitwirkung der Fahrgäste beim Betreten und Verlassen der Transporteinrichtungen in Form von Anmelde- und Abmeldehandlungen zwingend verlangen (sogenannte "Check In / Check Out"-Verfahren). Zur Steigerung des Fahrgast-Komforts und zur qualitativen Verbesserung der Fahrgast-Erfassungen wurden aber auch sogenannte "Walk In / Walk Out"-Verfahren konzipiert, bei denen ein vom Fahrgast mitgeführtes Ticket und die vom Leistungserbringer installierten Erfassungsgeräte selbsttätig miteinander kommunizieren. Das Ticket liegt bei beiden Systemen jeweils als Nutzungsberechtigung auf einem elektronischen Medium. Auch in anderen Anwendungsgebieten außerhalb des öffentlichen Personenverkehrs etablieren sich elektronische Nutzungsberechtigungen immer mehr, wie z.B. bei Eintrittskarten für Großveranstaltungen, Zimmerschlüsseln für Hotels, Nutzungsberechtigungen für Car-Sharing-Fahrzeuge oder Zutritts-Kontrollanlagen für Geschäftsgebäude.

Hinsichtlich des elektronischen Mediums, auf dem derartige Nutzungsberechtigungen abgelegt sind, haben sich Chipkarten nach dem Standard ISO 7816 durchgesetzt. Ebenso gängig sind Mobiltelefone, die zum kontaktlosen Austausch von Daten über kurze Strecken eingerichtet sind. Diesbezüglich beschreibt ISO/IEC 22536 einen bekannten und weit verbreiteten Standard. Wird ein solches Mobiltelefon im sog. "Card Emulation Mode" betrieben, so verhält es sich zu seinem Nahbereichs-Kommunikationspartner wie eine Chipkarte.

Das Aufbringen der Nutzungsberechtigungen auf die Chipkarte (bzw. allgemein das Nutzermedium) findet an sog. Ausgabeterminals mithilfe kryptographischer Verfahren statt. Die dazu notwendigen kryptographischen Schlüssel und Verschlüsselungsverfahren sind auf einem dem Ausgabeterminal zugeordneten Mikrokontroller mit kryptographischen Funktionen, einem sog. Secure Access Module (SAM), sicher abgespeichert bzw. implementiert. Der Mikrokontroller ist dabei entweder als Chipkarte oder aber auch als Hardwaresicherheitsmodul realisiert. In hierzu analoger Weise findet auch die Kontrolle der Nutzungsberechtigungen an Kontrollterminals unter Nutzung von (dem Kontrollterminal zugeordneten) Secure Access Modulen statt. Zur Kommunikation mit dem Nutzermedium wird an beiden Arten von Terminals ein Kartenleser verwendet. Dieser kann kontaktbehaftet oder auch kontaktlos sein.

Für die Ausgabe und die Kontrolle von Nutzungsberechtigungen müssen dabei sowohl die Ausgabe- als auch die Kontrollterminals mit Mikrokontrollern (im Folgenden: SAM) ausgestattet werden. Dabei müssen so viele SAMs im Feld installiert werden wie Terminals betrieben werden. Des Weiteren müssen die SAMs verwaltet werden. In der Praxis ist es beispielsweise erforderlich, kryptographische Schlüssel aus einem SAM zu löschen oder auf ein SAM in sicherer Weise einzubringen. Außerdem muss im Falle des Verlustes eines SAM dieses für eine weitere Ausgabe oder Kontrolle von Berechtigungen gesperrt werden.

Zur Ausgabe und Kontrolle von Nutzungsberechtigungen sind deshalb erhebliche Investitionen in die gerätetechnische Infrastruktur erforderlich. Es müssen die entsprechenden Terminals sowie die zugehörigen SAMs angeschafft und verwaltet werden. Die Vertriebssysteme und die physikalische Ausprägung der Trägermedien für die Nutzungsberechtigung sind dabei wechselseitig voneinander abhängig und bedingen sich gegenseitig. Außerdem muss eine passende Ausgabe- und/oder Kontrollsoftware angeschafft und gepflegt werden. Insbesondere bei Organisationen, die nur vergleichsweise selten (wie z.B. eine Universität nur 1x je Semester) und/oder nur in geringen Mengen (z.B. Jobtickets einer Firma) Berechtigungen ausgeben, stellt dies eine hohe Hürde bei der Einführung elektronischer Tickets bzw. Zugangsberechtigungen dar. Im Extremfall stehen die notwendigen Investitionen in keinem sinnvollen Verhältnis zu dem mit Einführung elektronischer Tickets bzw. Zugangsberechtigungen erzielbaren wirtschaftlichen Vorteil.

Der Erfindung liegt daher die Aufgabe zugrunde, ein Verfahren sowie ein System zur Ausgabe oder Kontrolle von Nutzungsberechtigungen bereitzustellen, das die Aufwendungen für Installation und Betriebsführung von Ausgabe- und Kontrollterminals für elektronische Nutzungsberechtigungen reduziert.

Erfindungsgemäß wird diese Aufgabe in Verbindung mit dem Oberbegriff des Patentanspruches 1 durch ein Verfahren gelöst, welches die folgenden Verfahrensschritte umfasst:
■ Registrieren einer Chipkarte an einem externen Terminal und Auslesen von den Nutzungsumfang beschreibenden oder die Nutzungsberechtigung identifizierenden Daten aus einem Chipkarten-Speicher,
■ Übertragung dieser Daten vom externen Terminal an einen zentralen Applikationsserver,
■ Verarbeitung dieser Daten durch den zentralen Applikationsserver und Überführung des Verarbeitungsergebnisses in ein verschlüsseltes Chipkarten-Kommando,
■ Senden mindestens eines verschlüsselten Chipkarten-Kommandos vom zentralen Applikationsserver an das externe Terminal sowie Empfangen mindestens einer verschlüsselten Chipkarten-Antwort des externen Terminals im zentralen Applikationsserver,
■ Entschlüsselung und Verarbeitung der mindestens einen verschlüsselten Chipkarten-Antwort durch den zentralen Applikationsserver sowie RückÜbertragung des unverschlüsselten Verarbeitungsergebnisses an das externe Terminal,
■ Auswertung des unverschlüsselten Verarbeitungsergebnisses durch das externe Terminal sowie Ansteuerung eines Aktuators oder Anzeigeelementes

Des Weiteren wird diese Aufgabe in vorrichtungsorientierter Hinsicht realisiert durch ein System zur Ausgabe und Kontrolle von Nutzungsberechtigungen, aufweisend:
■ wenigstens ein externes Terminal, welches eine Einrichtung zur Ansteuerung eines Chipkarten-Lesers sowie mindestens eine Einrichtung zur Ansteuerung eines Aktuators oder Anzeigeelementes beinhaltet,
■ sowie wenigstens einen zentralen Applikationsserver, der mindestens einen zur Ausführung der Ver- und Entschlüsselung der Chipkarten-Kommandos bzw. Chipkarten-Antworten eingerichteten Mikrokontroller mit kryptographischen Funktionen verfügt,
wobei der mindestens eine zentrale Applikationsserver und das mindestens eine externe Terminal zur wechselseitigen Internet-basierten Kommunikation eingerichtet sind.

Die Kernidee der Erfindung basiert auf der Einführung eines zentralen Applikationsservers, der über mindestens einen zur Ausführung der Ver- und Entschlüsselung von Chipkarten-Kommandos bzw. Chipkarten-Antworten eingerichteten Mikrokontroller mit kryptographischen Funktionen verfügt. Über Internet-basierte Kommunikationsverbindungen ist der Applikationsserver mit wenigstens einem externen Terminal verbunden. Jedes externe Terminal ist jeweils Bestandteil von hier nicht näher spezifizierten Vertriebssystemen, wobei es über wenigstens eine Einrichtung zur Ansteuerung eines Chipkarten-Lesers sowie mindestens eine Einrichtung zur Ansteuerung eines Aktuators oder Anzeigeelementes verfügt. Auf dem zentralen Server laufen sowohl die Ausgabe- als auch die Kontrollapplikation. Auf einem externen Terminal hingegen läuft lediglich eine Minimalapplikation. Diese besteht aus einer Ansteuerung eines Kartenlesers sowie aus einer Anzeigeeinheit und ggf. noch einer Ansteuerung externer Hardware (wie z.B. Drehkreuz, Alarmlampe). Der Kartenleser ist zur Nahbereichs-Kommunikation mit den als Nutzermedien vorgesehenen Chipkarten bzw. NFC-tauglichen Kommunikationsgeräten (NFC = Near Field Communication) eingerichtet. Die Minimalapplikation vermittelt somit die Kommunikation zwischen Nutzermedium und zentralem Server, zeigt dem Bediener ein Ergebnis seines Anwendungsfalles (z.B. ausgegebene Berechtigung, Kontrollergebnis) an und steuert die gegebenenfalls vorgesehene externe Hardware an.

Auf diese Weise wird die Möglichkeit geschaffen, in den Vertriebssystemen Nutzungsberechtigungen zur direkten Ausgabe oder zur späteren Abholung zu hinterlegen, ohne dass in den Vertriebssystemen Spezifika zur technischen Ausgabe dieser Nutzungsberechtigungen auf die jeweiligen Medien der Nutzungsberechtigten (im Folgenden: Nutzermedium) vorgehalten werden müssen. Diese Funktionalität ist dem zentralen Applikationsserver zugewiesen. Im Vertriebssystem wird hingegen vorteilhafterweise nur noch die Funktionalität vorgehalten, das Produkt bzw. die Dienstleistung, zu deren Bezug eine Nutzungsberechtigung erforderlich ist (z.B. Fahrkarte mit Abgangs- und Zielbahnhof), sowie den zugehörigen Vertriebsweg an den Bezieher der Nutzungsberechtigung (z.B. direkte Ausgabe über Luftschnittstelle auf ein mit NFC und Secure Element ausgestattetes Smartphone des Kunden) zu spezifizieren.

Am zentralen Applikationsserver sind für die Ausgabe auf die Nutzermedien mehrere SAMs angeschlossen. Pro Vorgang (Kontrolle oder Ausgabe) ist zwar nur ein SAM notwendig. Allerdings ist eine Parallelschaltung mehrerer SAMs sinnvoll, um mehrere Vorgänge gleichzeitig für verschiedene Nutzermedien durchführen zu können. Der Anschluss der SAMs kann dabei über ein sog. SAM-Cluster erfolgen. Dieser kann als 19"-Rahmen mit einer Mehrzahl von Einsteckkarten ausgeführt sein, wobei auf jeder der Einsteckkarten mehrere SAM-Steckplätze vorgesehen sind.

Der Kartenleser eines externen Terminals registriert das Auflegen eines Nutzermediums. Das externe System sendet daraufhin eine entsprechende Nachricht über die Anwesenheit des Nutzermediums am externen Terminal an den zentralen Server. Soll eine Berechtigung ausgegeben werden, enthält diese Nachricht noch zusätzliche, zur Ausgabe der Nutzungsberechtigung notwendige Informationen. Das kann z.B. eine Ticketbeschreibung sein. Diese enthält dann die Daten, welche in die Nutzungsberechtigung eingebracht werden sollen. Oder aber es handelt sich um eine eindeutige Identifikations-Kennung ("ID") eines Nutzermediums. Damit kann eine auf anderem Wege bereits erstellte Nutzungsberechtigung zur Abholung durch den Nutzer bereitgestellt werden.

Der zentrale Server antwortet mit einem Chipkarten-Kommando gemäß APDU ("Application Protocol Data Unit", gemäß ISO 7816-4) und sendet dieses an das externe Terminal. Das externe Terminal leitet die APDU über den am externen Terminal angeschlossenen Kartenleser an das Nutzermedium weiter.

Das Nutzermedium bearbeitet das Chipkarten-Kommando und sendet als Ergebnis ein Antwort-Kommando ("Response-APDU", ebenfalls gemäß ISO 7816-4) über den Kartenleser an das externe System. Das externe System verpackt dieses Antwort-Kommando in eine Nachricht und sendet es an den zentralen Server. Dort wird das Antwort-Kommando ausgewertet und in Erwiderung hierauf ggf. ein neues Chipkarten-Kommando ausgesendet. Der Inhalt dieses Chipkarten-Kommandos ist abhängig vom gerade aktuellen Anwendungsfall (z.B. Ausgabe oder Kontrolle).

Der Vorgang des Sendens des Chipkarten-Kommandos und des Antwort-Kommandos kann sich mehrmals wiederholen.

Ist der Anwendungsfall abgeschlossen, sendet der zentrale Server eine abschließende Nachricht an das externe Terminal. Diese abschließende Nachricht kann Daten enthalten, die dem Anwender durch das externe Terminal angezeigt werden sollen (z.B. den Inhalt einer eben gerade ausgegebenen Nutzungsberechtigung oder das Ergebnis einer Prüfung einer Nutzungsberechtigung). Bedarfsweise kann die abschließende Nachricht noch eine Information zur Ansteuerung einer externen Hardware-Komponente enthalten (z.B. Freigabe eines Drehkreuzes, Aktivieren einer Alarmlampe etc...).

Dieser erfindungsgemäße Lösungsansatz ermöglicht eine Komplexitätsreduktion in den Vertriebssystemen, da Logiken für die Ausgabe von Berechtigungen nicht mehr direkt im Vertriebssystem liegen müssen, sondern in der Fulfilmentplattform gekapselt werden. Darüber hinaus ermöglicht der Lösungsansatz eine Flexibilisierung, da einem Vertriebssystem recht einfach und je nach Kundenwunsch verschiedene Wege zur Ausgabe einer Berechtigung angeboten werden können.

Des Weiteren müssen die SAMs bei Anwendung dieses Lösungsansatzes nicht mehr an jedem Ausgabe- oder Kontrollterminal vorgehalten werden. Die Administration der SAMs incl. Schlüsselverwaltung kann zentral erfolgen. Die SAMs können beispielweise in einem Rechenzentrum vorgehalten werden, wodurch das Risiko deren Diebstahls wirksam minimiert wird.

Eine Nutzungsberechtigungen ausgebende Organisation muss nun nicht mehr in teure Infrastruktur investieren. Es genügen nun z.B. ein PC mit einem angeschlossenen Kartenleser sowie eine Minimalapplikation. Diese Minimalapplikation ist hinsichtlich Anschaffung und Pflege günstiger als eine eigenständige Applikation, die immer auf dem neuesten Stand gehalten werden muss.

Weiterhin ist es mit der erfindungsgemäßen Lösung möglich, Berechtigungen über einen WebShop zu erstellen und über die Minimalapplikation und den Kartenleser direkt am Rechner des Anwenders aufzubringen.

Interessant ist insbesondere die Möglichkeit, Berechtigungen aller Art (z.B. Fahrkarten, Kinotickets, Eintrittskarten zu Messen), die aus verschiedenen Vertriebssystemen stammen, auf unterschiedlichen Medien (z.B. Chipkarte, Smartphone mit NFC und Secure Element, Papier) über einen standardisierten Weg auszugeben. Die sich im bisherigen Stand der Technik zwangsweise ergebende Kopplung zwischen Vertriebssystem und Art des Trägermediums, auf dem die Nutzungsberechtigung gespeichert ist, wird durch die Erfindung überwunden.

Der Erfindungsgedanke wird in nachfolgenden Figuren verdeutlicht. Es zeigen:
- **Figur 1**: System zur Ausgabe einer Nutzungsberechtigung an einem Ausgabeterminal (gemäß Stand der Technik)
- **Figur 2**: System zur Kontrolle einer Nutzungsberechtigung an einem Kontrollterminal (gemäß Stand der Technik)
- **Figur 3**: System zur Ausgabe und Kontrolle von Nutzungsberechtigungen gemäß Erfindung

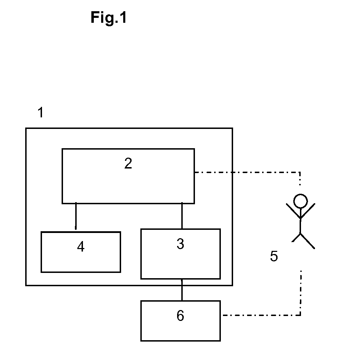

In Figur 1 ist ein System zur Ausgabe einer Nutzungsberechtigung an einem Ausgabeterminal (1) gemäß dem aktuellen Stand der Technik dargestellt.

Ein Anwender (5) möchte eine Berechtigung auf ein Nutzermedium (6) ausgeben. Dazu verwendet er ein Ausgabeterminal (1), welches eine geeignete Ausgabeapplikation (2) zu Verfügung stellt. Die konkrete Ausprägung ist von der Art der auszugebenden Nutzungsberechtigung abhängig. Ein Beispiel hierfür ist die Ausgabeapplikation eines Fahrkarten-Automaten incl. Bedienoberfläche.

Die zur Ausgabe der Nutzungsberechtigung notwendigen Daten sind - nebst Bezahlung - durch den Anwender am Terminal einzugeben. Alternativ hierzu können anderweitig (z.B. mittels Anruf in einem Call Center) erzeugte Nutzungsberechtigungen zur Abholung bereit gelegt werden. In diesem Fall geschieht die Zuordnung einer abholbereiten Berechtigung zu einem Nutzermedium über eine eindeutige auf dem Benutzermedium aufgebrachte Identifikationsnummer.

Der Anwender legt im nächsten Schritt das Nutzermedium (6), auf welches die Berechtigung aufgebracht werden soll, auf den Kartenleser (3) des Ausgabeterminals (1) auf. Die Ausgabeapplikation (2) führt nun die Ausgabe anhand der vom Anwender eingegebenen Daten durch bzw. holt die auszugebende Berechtigung anhand der Identifikationsnummer des Nutzermediums z.B. von einer zentralen Datenbank ab und gibt sie dann aus.

Für die Ausgabe kommuniziert die Ausgabeapplikation (2) sowohl mit dem SAM (4), um die Ausgabe kryptographisch abzusichern, als auch mit dem Nutzermedium (6), um die Berechtigung auszugeben. Dazu sendet die Ausgabeapplikation (2) Kommandos an SAM (4) und Nutzermedium (6).

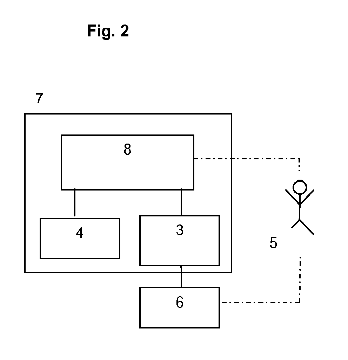

In Figur 2 ist ein System zur Kontrolle einer Nutzungsberechtigung an einem Kontrollterminal gemäß dem aktuellen Stand der Technik dargestellt.

Der Anwender (5) begibt sich mit der auf dem Nutzermedium (6) aufgebrachten Berechtigung an ein Kontrollterminal (7). Das kann z.B. ein Drehkreuz als Eingangskontrolle zu einer Veranstaltung sein oder ein mobiles Terminal in einem öffentlichen Verkehrsmittel. Dort hält er das Nutzermedium (6) an den Kartenleser (3) des Kontrollterminals (7). Die Kontrollapplikation (8) auf dem Kontrollterminal liest die Berechtigung vom Nutzermedium. Sie überprüft die Echtheit der Berechtigung mittels kryptographischer Verfahren. Dazu verwendet die Kontrollapplikation ein SAM (4). Ggf. werden noch weitere Prüfungen durchgeführt. Beispielsweise kann geprüft werden, ob die Berechtigung durch Eintrag in einer Sperrliste gesperrt ist. Ggf. wird die Berechtigung in einem solchen Fall noch zusätzlich als gesperrt markiert, so dass in Zukunft die Sperre der Berechtigung auch ohne Zugriff auf eine Sperrliste erkannt werden kann.

Das Kontrollterminal (7) zeigt die Berechtigung an und ob diese gültig ist. Ggf. öffnet das Kontrollterminal ein Drehkreuz oder nimmt ähnliche Aktionen vor um dem Anwender den gewünschten Zutritt zu ermöglichen.

Wie beim Ausgabevorgang auch sendet die Kontrollapplikation während des Kontrollvorgangs Kommandos an SAM und Nutzermedium, um die Kontrolle durchzuführen.

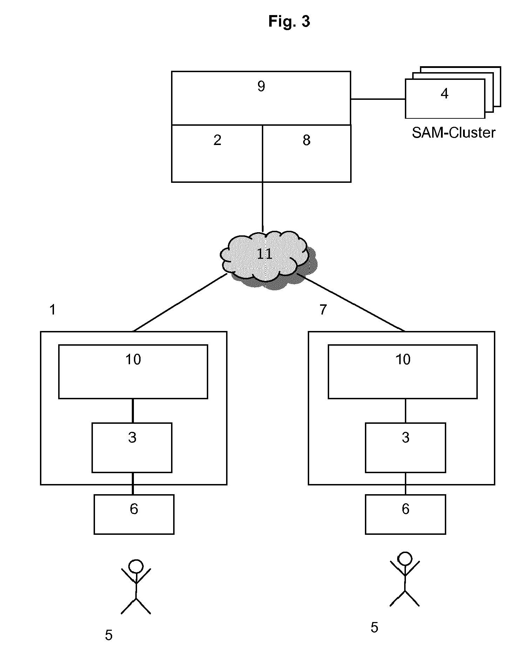

In Figur 3 ist die Ausgabe und Kontrolle von Nutzungsberechtigungen gemäß der Erfindung dargestellt.

Der Anwender (5) kann sich eine elektronische Fahrtberechtigung über einen Ticketautomaten bzw. Ausgabeterminal (1) ausgeben lassen. Dazu gibt er seinen Reisewunsch an der Bedienoberfläche des Ticketautomaten ein. Nach erfolgter Bezahlung des Tickets sendet der Automat die Ticketdaten (z.B. Start, Ziel, Personenzahl, Komfortklasse, Preis) an einen zentralen Server (9). Dort wird der Datenstrom des elektronischen Tickets erstellt und die Ausgabe der Nutzungsberechtigung über den Kartenleser (3) des Fahrkartenautomaten gesteuert. Alternativ und analog hierzu kann die Erstellung einer Nutzungsberechtigung auch über einen Internet-basierten Web-Shop erfolgen.

Bei der Kontrolle im Zug führt der zentrale Server die Steuerung des Kontrollvorgangs durch. Sobald das vom Personal im Zug mitgeführte Kontrollterminal (7) eine am Kartenleser (3) aufgelegte Chipkarte (6) erkennt, sendet es eine entsprechende Nachricht an den zentralen Server (9). Dieser kommuniziert über das Kontrollterminal (7) und den Kartenleser (3) des Kontrollterminals mit der aufgelegte Chipkarte und liest auf diesem Wege alle für die Kontrolle notwendigen Daten aus der hinterlegten Nutzungsberechtigung. Auf diese Weise führt die Kontrollapplikation (8) des zentralen Servers Prüfungen gegen eine zentrale Sperrliste durch oder führt weitere Prüfschritte aus.

### Bezugszeichenliste:

- 1: Ausgabeterminal
- 2: Ausgabeapplikation
- 3: Kartenleser
- 4: Mikrokontroller mit kryptographischen Funktionen (SAM)
- 5: Anwender
- 6: Nutzermedium
- 7: Kontrollterminal
- 8: Kontrollapplikation
- 9: Zentraler Server
- 10: Minimalapplikation
- 11: Internet

## Patentansprüche

1. Verfahren zur Ausgabe oder Kontrolle von Nutzungsberechtigungen, aufweisend die folgenden Verfahrensschritte:
■ Registrieren einer Chipkarte (6) an einem externen Terminal (1) und Auslesen von den Nutzungsumfang beschreibenden oder die Nutzungsberechtigung identifizierenden Daten aus einem Chipkarten-Speicher,
■ Übertragung dieser Daten vom externen Terminal (1) an einen zentralen Applikationsserver (9),
■ Verarbeitung dieser Daten durch den zentralen Applikationsserver und Überführung des Verarbeitungsergebnisses in ein verschlüsseltes Chipkarten-Kommando,
■ Senden mindestens eines verschlüsselten Chipkarten-Kommandos vom zentralen Applikationsserver an das externe Terminal sowie Empfangen mindestens einer verschlüsselten Chipkarten-Antwort des externen Terminals im zentralen Applikationsserver,
■ Entschlüsselung und Verarbeitung der mindestens einen verschlüsselten Chipkarten-Antwort durch den zentralen Applikationsserver sowie RückÜbertragung des unverschlüsselten Verarbeitungsergebnisses an das externe Terminal,
■ Auswertung des unverschlüsselten Verarbeitungsergebnisses durch das externe Terminal sowie Ansteuerung eines Aktuators oder Anzeigeelementes.

2. System zur Ausgabe und Kontrolle von Nutzungsberechtigungen, aufweisend:
■ wenigstens ein externes Terminal (1, 7), welches eine Einrichtung zur Ansteuerung eines Chipkarten-Lesers (3) sowie mindestens eine Einrichtung zur Ansteuerung eines Aktuators oder Anzeigeelementes beinhaltet,
■ sowie wenigstens einen zentralen Applikationsserver (9), der mindestens einen zur Ausführung der Ver- und Entschlüsselung der Chipkarten-Kommandos bzw. Chipkarten-Antworten eingerichteten Mikrokontroller (4) mit kryptographischen Funktionen verfügt,
wobei der mindestens eine zentrale Applikationsserver (9) und das mindestens eine externe Terminal (1, 7) zur wechselseitigen Internet-basierten Kommunikation (11) eingerichtet sind.

3. System nach Patentanspruch 2, **dadurch gekennzeichnet, dass** der zentrale Applikationsserver (9) über eine Mehrzahl parallelgeschalteter Mikrokontroller (4) mit kryptographischen Funktionen verfügt.
